(19) Europäisches Patentamt / European Patent Office / Office européen des brevets

(11) **EP 3 903 952 A1**

(12) **EUROPEAN PATENT APPLICATION**
published in accordance with Art. 153(4) EPC

(43) Date of publication:
**03.11.2021 Bulletin 2021/44**

(51) Int Cl.:
**B09B 3/00** (2006.01)   **B29B 17/02** (2006.01)
**B03B 9/00** (2006.01)   **C22B 7/00** (2006.01)
**C22B 21/00** (2006.01)

(21) Application number: **19904379.5**

(22) Date of filing: **26.12.2019**

(86) International application number:
**PCT/BR2019/050563**

(87) International publication number:
**WO 2020/132733 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018   BR 102018077286**
**28.11.2019   BR 102019025163**

(71) Applicant: **Companhia Brasileira De Alumínio**
**04571-010 São Paulo, SP (BR)**

(72) Inventor: **JUNIOR, Roberto, Seno**
**18051-861 Sorocaba, SP (BR)**

(74) Representative: **Weidner Stern Jeschke Patentanwälte Partnerschaft mbB**
**Universitätsallee 17**
**28359 Bremen (DE)**

(54) **ALUMINIUM RECOVERY METHOD**

(57)    A process for the recovery of aluminum, or recycling process, is described, which is based on separating the aluminum contained in aseptic carton packs (1), flexible packs (2) and residual aluminum alloy powder (3) used in manufacturing additive, through the selective dissolution of aluminum in a solution known as Bayer liquor and/or caustic soda, with sodium aluminate (liquid) and hydrogen gas ($H_2$, gaseous) products. Both products can be used in an alumina refinery, the sodium aluminate is used for the production of aluminum hydroxide and the hydrogen can be used as fuel for boilers, furnaces or similar.

**Figure 5**

**Description**

The present invention relates to aluminum recovery processes and, more particularly, to the recycling of aluminum present in aseptic carton packs and flexible packs, after processes of mechanical separation of paper and cleaning. It also refers to the recovery of aluminum from aluminum powder from the production of parts by additive manufacturing, for example, 3D printing.

**State of the art**

As is well known in this area, multilayer packaging laminated with aluminum foil has promoted great gains in reducing the carbon footprint of companies as it has reduced the weight of packaging and increased the protection of food from agents such as light, moisture, and oxygen. Nowadays, the challenge for industries that produce laminated multilayers is in post-consumption, both to carry out reverse logistics and to recycle packaging.

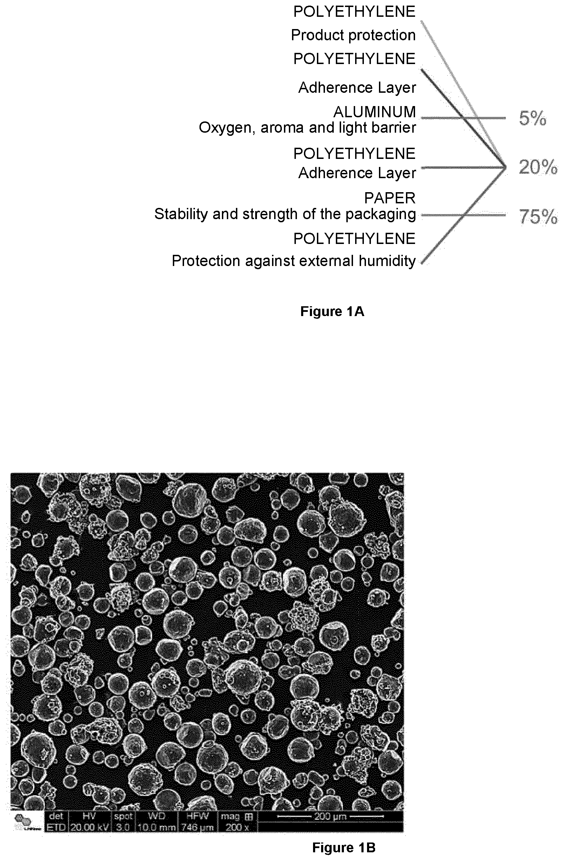

Among these packages there is, for example, aseptic carton packs (as shown in figure 1A), composed of paper, polyethylene and aluminum. There are also flexible packages, and among the most varied we can find aluminum, polyethylene, polypropylene, PET, biaxially oriented polyamide (BOPA), polyester, copolymers, bioriented polyethylene (BOPP) in its composition.

Aluminum represents about 5% of the aseptic carton pack.

There are already processes for separating the paper layer from polyethylene films through a mechanical separator, known as Hidrapulper. The difficulty lies in separating the aluminum present in this by-product of polyethylene and aluminum, known as PolyAlu, because there is an adhesion between the polyethylene and the aluminum.

For the separation of PolyAlu there are chemical and thermal processes. EET/TSL, a plant located in the city of Piracicaba features pyrolysis technology followed by thermal plasma and holds a process that generates byproducts of paraffin compounds and aluminum flakes. This plant is currently closed and it is a plant that does not have a self-sustaining process, as it uses electricity.

There are other separation processes known, such as: that of the company Bioware, which developed a pyrolysis technology in cooperation with the applicant, as described in document BR 10 2017 004348-7, published on 10/30/2018, and concerning a process for the recovery by pyrolysis of aluminum and polymers present in aseptic carton packages; that of the company Saperatec, which presents a chemical separation process in document US 2017/0080603 A1; that of the company Stora Enso, a Finnish company that inaugurated in Spain in 2011 a pyrolysis plant (operating at around 400 °C) for recycling aluminum and polyethylene from cartons (Marques, 2013); that of the company Enval, which presents a pyrolysis technology of plastic and aluminum laminates through microwaves to induce pyrolysis (temperatures higher than 1000 °C) and generate valuable oils (Source: Enval's website); that of the company Pyral, which has developed a patented pyrolysis technology with a temperature around 500 °C (Source: Pyral's website); and that of Maim Engineering, an Italian company, which presents a thermochemical pyrolysis technology through a wet and slow process and catalyzed by $RH_2INO$, for low-cost energy generation (Source: Maim Engineering website); among others.

The products obtained after pyrolysis are compounds or other organic compounds, in addition to aluminum contaminated with polyethylene. In these separation processes it is possible to see that the interest lies in the recovery of the polymers present, which already have a consumer market, making the packaging plastic renewable.

The recycling of aluminum, on the other hand, presents technological and economic barriers, as it is difficult to be remelted. The aluminum coming from pyrolysis is very fine and presents difficulties for compaction. In remelting furnaces (traditional recycling) aluminum oxidation occurs, with increased slag generation. The residual polyethylene from the separation process has the same slag generation effect. The purity of the final aluminum obtained is usually low and the energy cost to separate residues from pyrolysis is high. These barriers make it impossible to recycle aluminum in smelters.

Thus, the search for a technologically sound, economically viable, and ecologically responsible process for recovering aluminum from aseptic cartons and flexible packaging after mechanical separation from paper persists in the art.

In addition, the studies on additive manufacturing of parts with complex and differentiated geometries have grown a lot in the last years, which has generated a search for more efficient methods to increase quality and reduce costs. Thus, the 3D printing process is a method that is studied for this application and there are already applications with aluminum alloys.

In additive manufacturing, aluminum alloys are being studied to create new products that require low density and good mechanical resistance. There are many techniques for part production by rapid prototyping, including powder-based processing, such as selective laser sintering (SLS) and selective laser fusion (SLM), in which a layer is deposited on a bed and the laser selectively sinters, according to the design of the piece, layer by layer inside a chamber, until the object is built and cooled.

After processing, part of the powder that was used in these processes ends up losing its physical characteristics, and may condense and remain agglomerated, which causes defects in the part and loss of mechanical properties. Studies show that when using recycled powder to process new parts, losses of mechanical properties occur. Therefore, the reuse of the powder after the prototyping of a part is made only of part of the powder. The part that was partially hit by the laser is discarded.

Currently there are no routes to recycle this material and this causes it to be disposed of in an incorrect manner. Thus, thinking about the near future, where additive manufacturing of parts with aluminum alloys is carried out, this powder should also be recycled.

**Purposes of the Invention**

The primary object of the invention is an alkaline hydrometallurgical process, preferably using NaOH and/or Bayer process solution (sodium aluminate), for converting aluminum from recycled aseptic carton or flexible packaging previously processed via mechanical, chemical or thermal separation into sodium aluminate, with hydrogen generation.

A process for recycling aluminum powder from additive manufacturing processes constitutes a further object of the invention.

**Synthesis of the Invention**

These and other objectives are achieved from the process of aluminum recovery from a recycled material containing aluminum, such as aseptic carton packages, flexible packages, aluminum powders, or similar, comprising the steps of: dissolving, via alkaline dissolution, the aluminum-containing raw material in Bayer liquor and/or NaOH, generating sodium aluminate and hydrogen gas; and subjecting the sodium aluminate to Bayer's process for producing alumina and then aluminum. Furthermore, the process comprises the additional step of using the hydrogen gas produced in the alkaline dissolution step as fuel in the combustion units of the alumina refinery.

Alkaline dissolution comprises the reaction, in a reactor, of the post-treated raw material with caustic soda, caustic soda being added in an amount of up to 50% by weight. Alternatively, the post-treated feedstock is reacted with Bayer liquor, said Bayer liquor being added in concentrations of 100 g/l to 1,000 g/l, on a $Na_2CO_3$ basis. Alternatively, alkaline dissolution comprises the reaction of the post-treated raw material with a mixture comprising caustic soda and Bayer liqueur.

After the alkaline dissolution step, the additional step of carrying out a liquid/solid separation is foreseen in order to separate the sodium aluminate (liquid) from the polymeric residues (solids). Solid polymeric waste is subjected to a cleaning process and subsequent recycling. The process of cleaning the solid waste includes washing the solid waste with water to eliminate the residual sodium aluminate, then drying the solid waste and further processing the polymer, via extrusion, pressing, injection, among others.

Finally, the process of the invention further provides for the preparation of the aluminum-containing raw material prior to alkaline dissolution. Thus, when the recycled material containing aluminum is obtained from aseptic carton packages, the cleaning process comprises the steps of: removing the paper, preferably via hydrapulper, generating an aluminum-polymer laminated by-product (PolyAlu); and processing the by-product (PolyAlu), from: a cleaning procedure, to generate a feedstock suitable for the alkaline dissolution step; or a pyrolysis process followed by a char removal process, to generate a feedstock suitable for the alkaline dissolution step; or a chemical separation process, to generate a feedstock suitable for the alkaline dissolution step. When the recycled material containing aluminum is obtained from flexible packaging, the process comprises the steps of: subjecting the flexible packaging to a pyrolysis process followed by a charcoal removal process, to generate a raw material suitable for the alkaline dissolution step; or grinding the flexible packaging, or the flexible packaging chips, to generate a raw material suitable for the alkaline dissolution step. Finally, and when the recycled material containing aluminum is aluminum powder, alkaline dissolution proceeds directly, without the need for any previous treatment. The process of the invention provides that the alkaline dissolution can employ one, or a combination, of the above raw materials.

More particularly, the present invention proposes new routes for recycling the aluminum contained in the material known as PolyAlu from recycled packaging generated after mechanical, thermal or chemical separation of the polymer layers, even if it still has a contamination of polymers or paraffinic compounds. The invention also proposes this recycling route for recycling the aluminum contained in flexible packaging and also the aluminum present in the powder after processing via additive manufacturing.

**Brief Description of figures**

The present invention will be better understood from the detailed description of its preferred ways of realization, which take as reference the attached figures, brought as illustrative and not limitative of the invention, in which:

figures 1A and 1B illustrate two possible sources of recycled aluminum suitable for use in the process of the invention, and in particular figure 1A illustrates the layers that define an aseptic carton, or long-life package, while figure 1B is an figure of the Aluminum powder before processing;

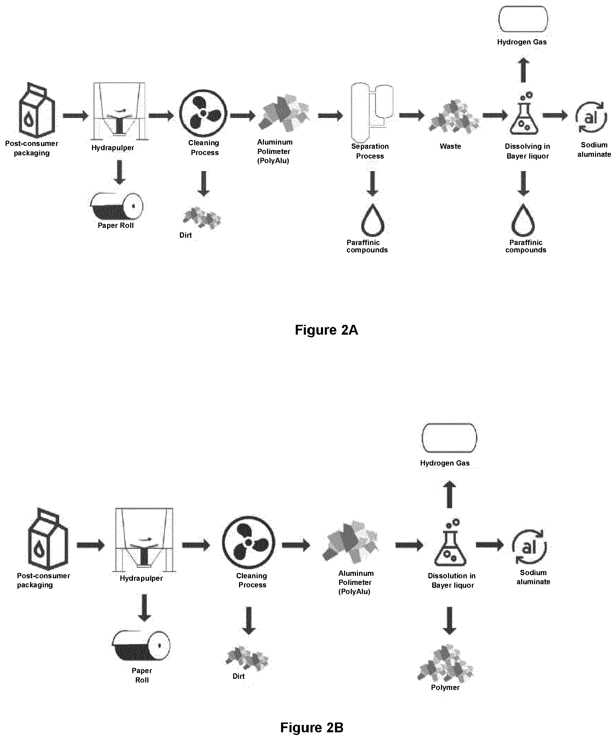

figures 2A and 2B schematically illustrate the process of the present invention;

figure 3 is a schematic representation of the composition of the Bayer liquor;

figure 4 is a flow diagram of the production process, according to the invention, with different raw materials (1) PolyAlu after hydrapulper (1.a) PolyAlu after the cleaning process (1.b) PolyAlu after pyrolysis (1. c) PolyAlu after chemical separation (2) Flexible Packaging (2.a) Flexible Packaging after pyrolysis (3) Aluminum powder after 3D printing;

figure 5 is the flowchart of the production process divided into 4 stages: (Stage 1) preparation of the raw material; (Step 2) alkaline dissolution of aluminum; (Step 3) separation and cleaning after alkaline dissolution; and (Step 4) recycling of the polymer;

figure 6 is a schematic illustration of the PolyAlu cleaning process, according to Step 1 of the process;

figure 7 is the flow chart of the alkaline dissolution process, according to step 2 of the process;

figure 8 is a flow chart of the solid-liquid separation process, according to Step 3;

figure 9 is a flow chart of the cleaning process, according to Step 3 of the invention process;

figure 10 is the FTIR analysis graph of PolyAlu after the cleaning process;

figure 11 is the DSC analysis graph of PolyAlu after the cleaning process;

figure 12 is the graph of the aluminum dissolution temperature profile;

figure 13 is the FTIR analysis graph of the polymer from PolyAlu after the aluminum dissolution process;

figure 14 is the DSC analysis graph of the polymer from PolyAlu after the aluminum dissolution process;

figure 15 is the comparative graph of DSC of PolyAlu after the cleaning process and the polymer from PolyAlu after the aluminum dissolution process;

figures 16A and 16B are, respectively, photos of the PolyAlu before and after the alkaline dissolution process;

figure 16C is a photo of the polymer after the dissolution process, hot compacted (melt) and milled;

figure 16D is a photo of the extruded polymer;

figures 16E and 16F are photos of the polymer after injection of tensile specimens into a mold; and

figure 17 is a graph of the stress and strain of the polymer after the dissolution process.

figure 18 is a photo of the experiment with agitation and temperature control;

## Detailed description of the Invention

As anticipated, the present invention comprises a process for recycling aluminum, from the recycling of aseptic carton packs. The invention also comprises a process for recycling aluminum from flexible packaging and aluminum powder from additive manufacturing.

More particularly, the invention comprises a hydrometallurgical process for the conversion of aluminum to sodium aluminate with hydrogen gas generation, allowing these to be incorporated into the Bayer process for alumina production. This process presents as products: sodium aluminate, which is also generated in the Bayer process, for the production of alumina; and hydrogen, a gas that presents great calorific power and its burning does not generate greenhouse effect gases. Hydrogen can be used as a fuel in the refinery if it is mixed with natural gas or combustion air in the calciners or boilers. The invention is still apt to generate gains for the refinery in reduced bauxite and NaOH consumption, lower waste generation, and higher energy efficiency.

The Bayer process is known as a technology for producing aluminum oxide ($Al_2O_3$), also known as alumina, which is the raw material for aluminum production. This process can be briefly described as: the digestion of bauxite, an ore containing alumina, through the addition of caustic soda (NaOH) and a system controlled by temperature and pressure. The attack of alumina by soda can be defined by the reaction:

$$Al_2O_3(s) + 2NaOH \rightarrow 2NaAlO_2(sol) + H_2O(liq)$$

This attack forms $NaAlO_2$ (l) sodium aluminate. The other minerals present in bauxite are inert to the process and remain in solid form, being discarded in the form of "red mud", the residue of the Bayer process. The solution, known as Bayer liquor, with the presence of sodium aluminate, proceeds to precipitate aluminum hydroxide ($Al_2O_3.3H_2O$), also known as hydrate, according to the equation below:

$$2NaAlO_2(sol) + 4H_2O\ (l) + seeds \rightarrow Al_2O_3.3H_2O(s) + 2NaOH\ (sol)$$

The liquor returns to the digestion process and the hydrate goes to calcination, where the operation reaches temperatures around 1000 °C, removing the molecules of crystallization water. The stage is represented in the equation:

$$Al_2O_3.3H_2O(s) \rightarrow Al_2O_3(s) + 3H_2O(v)$$

The alumina produced goes on to the electrolytic reduction process for the production of primary aluminum, known as Hall-Heroult.

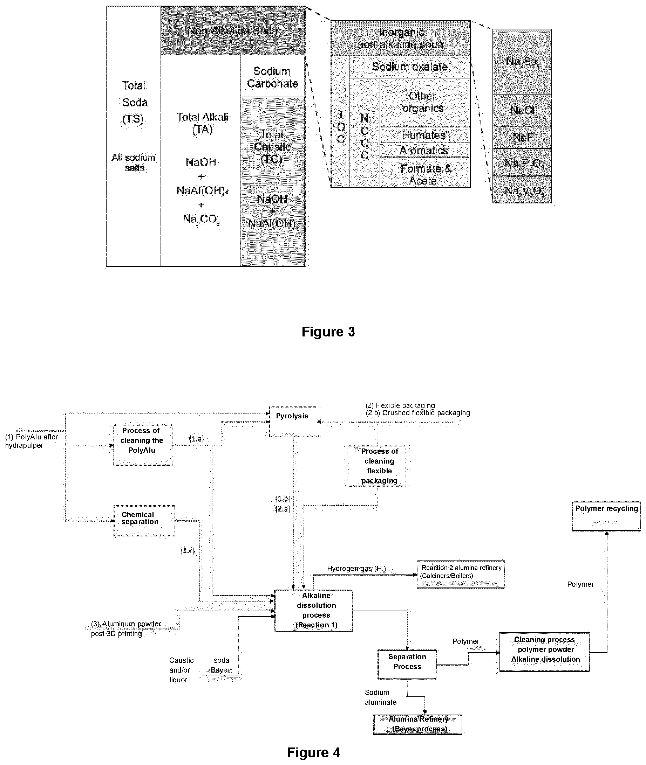

In turn, Bayer liqueur has a complex composition. But in general, it is possible to state that it is composed of: sodium aluminate, other sodium compounds and an excess of caustic soda, as shown in figure 3 (Source: Hydrometallurgy - International Journal from Elsevier).

Thus, and returning to the invention itself, the invention consists of incorporating reactions 1 and 2 (below) in the alumina production process, allowing the recycling of aluminum from the materials mentioned in the first paragraph of the detailed description of the invention. Reaction 1 dissolves the aluminum contained in the materials, generating hydrogen and sodium aluminate. The hydrogen is harnessed through reaction 2 allowing energy gain and fuel consumption reduction at the refinery. The aluminate generated is used in the Bayer process, just like the sodium aluminate regularly generated in the refinery. Thus, there is a reduction in the consumption of bauxite and NaOH and also less generation of waste, known as "red mud". The remaining polymers from the initial materials are then separated, washed and dried for later recycling.

**Reaction 1: Reaction of metallic aluminum with sodium hydroxide for the production of hydrogen**

The following reaction is already a known reaction for the generation of sodium and hydrogen aluminate:

$$2 \text{ NaOH (aq)} + 2 \text{ Al (s)} + 2H2O \text{ (aq)} \rightarrow 2 \text{ NaAlO2}_{(aq)} + 3 \text{ H2}_{(g)} \text{ (Reaction 1) energy release: } \Delta H = -1133.2 \text{ kJ/mol}$$

The reaction is exothermic and releases a lot of heat, besides promoting the dissolution of the aluminate in the solution and releasing hydrogen gas during the process.

There are many studies on the generation of hydrogen gas from aluminum. For example, the Universidade Federal do Rio Grande do Sul, UFRGS, published in Scielo a study of the production of hydrogen from the reaction of aluminum and water in the presence of NaOH or KOH (Porciúncula, et al., 2011) which conclude that this process generates a high purity hydrogen gas.

**Reaction 2: Hydrogen combustion**

The combustion of hydrogen gas can be described by the following reaction:

$$2 \text{ H}_2(g) + O_2(g) \rightarrow 2 \text{ H}_2O(l) + 572 \text{ kJ (286 kJ/mol) (Reaction 2)}$$

Among the fuels used, this one has the highest amount of energy per unit mass. For example, approximately three times the calorific value of natural gas. The difficulty of its competitiveness is in production, since hydrogen is not a primary fuel and, for its generation, it is necessary to extract it from the association of this hydrogen from its source of origin.

**Description of the Invention Stages:**

The use of reactions 1 and 2 above, in the Bayer process, follows the proposed route, as illustrated in figure 4, consists of the alkaline dissolution of aluminum present in the raw material in sodium and hydrogen aluminate. The raw material that comprises aluminum can come from different origins: (1) PolyAlu after hydrapulper; (1.a) PolyAlu after the cleaning process; (1.b) PolyAlu after pyrolysis; (1.c) PolyAlu after chemical separation; (2) Flexible packaging; (2.a) Flexible packaging after pyrolysis; or (3) 3D post-printing aluminum powder. At the end of this route, there is the separation of the polymer, which goes through the cleaning and later recycling stage.

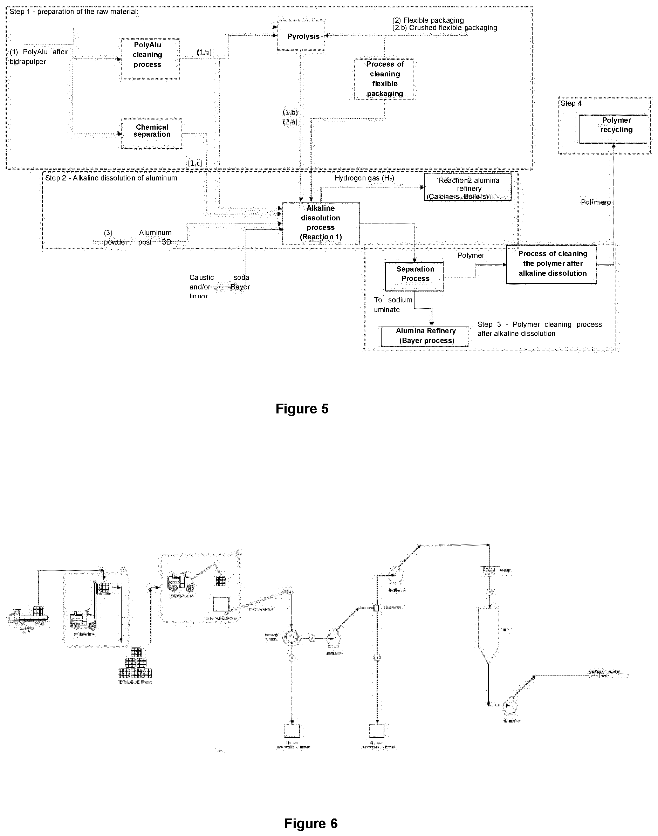

The production process, according to the invention (see figure 5), can be divided into 4 stages, namely:

Step 1 - preparation of the raw material;
Step 2 - alkaline dissolution of aluminum;
Step 3 - separation and cleaning of the polymer after alkaline dissolution; and
Step 4 - polymer recycling (except for 3D post-printing aluminum powder).

**STEP 1** - **Preparation of the raw material**

**Raw material (1) PolyAlu after hydrapulper**

The post-consumer aseptic packaging is processed in recyclers, where the paper is reused and the PolyAlu residue is generated and baled. The PolyAlu paper separation system consists of mixing the packages with water in a device called a hidrapulper.

**Raw material (1.a) PolyAlu after the cleaning process**

For the generation of the raw material (1.a), PolyAlu proceeds to the cleaning process, as shown in Figure 6.
The metal strips that hold the bales are removed manually. A mini loader with grapples, or other capable equipment, performs the "unpacking" of the material and feeds the box that directs it to a separator, with the function of segregating the fibers and later sending the material to a sequence of fans that perform the pneumatic transport. A fan is placed between the fans, which separates unwanted residues of greater weight.

**Raw material (1.b) PolyAlu after pyrolysis & (2.a) Flexible packaging after pyrolysis**

The formation of raw materials (1.b) and (2.a) takes place in pyrolysis reactors and subsequently proceeds to a coal removal step. Coal is an undesirable constituent, as it contaminates Bayer liquor in the alkaline dissolution stage.
Pyrolysis is not a necessary step in the process of alkaline dissolution of aluminum from PolyAlu and flexible packaging, but it is an alternative to the difficulty of recyclers to separate this material from metalized plastic packaging.

**Raw material (1.c) PolyAlu after chemical separation**

The formation of the raw material (1.c) occurs in tanks separating the layers through chemical reaction followed by washing.
Chemical separation is not a necessary step in the alkaline aluminum dissolution process from PolyAlu, but it is an alternative to exposing the aluminum layer. A problem faced by this process is the waste generated.

**Raw Material (2) Flexible Packaging**

Flexible packaging (2) suitable for the process of the invention comprises: plastic packaging laminated with multilayer films of different structures and an aluminum layer, usually used in the food industry, personal hygiene, chemical industry, cosmetics and pharmaceuticals.
The chips from the flexible packaging production process (2) do not need to go through the cleaning step, but they must be reduced in size in mills to improve the reaction of the raw material (2b) thus generated. Flexible recycled packaging, on the other hand, requires a previous cleaning step and is reduced in size.

**Raw material (3) aluminum powder 3D post printing**

Aluminum powder does not need to be pre-treated.

**STEP 2 - Alkaline dissolution process of aluminum**

Reaction 1 occurs after adding the material in a reactor together with caustic soda, up to 50% by weight, or liquor from the Bayer process (sodium aluminate) in concentrations of 100 g/l to 1,000 g/l in the $Na_2CO_3$ base. Alternatively, the alkaline dissolution process can occur by feeding, in said reactor, the material (raw material 1a, 1b, 1c, 2, 2a or 3) containing aluminum with a mixture between caustic soda and Bayer liquor. In this case, the relative amounts of caustic soda and Bayer liquor must be proportional to the maximum individual amounts, according to the parameters above.
Feeding the reactor with one of the raw materials described in step 1, occurs with batch fans so that it is possible to vary the aluminum supply from different sources, as shown in Figure 5. In plants with only one material source, it is possible to carry out the process continuously.
The location of the reactor should preferably be close to the consumer of the hydrogen gas generated. In boilers and calciners of refineries supplied with natural gas it is possible to blend the two gases and reuse the energy generated.
In alumina refineries that do not use natural gas, it is possible to burn hydrogen gas mixed with combustion air in boilers, calciners, similar systems, or store them for later sale. Both processes require the compressor to help remove the gas generated in the reactor and perform compression.

**STEP 3 - Process of separation and cleaning of the polymer after dissolution**

**Separation process of polymer and sodium aluminate**

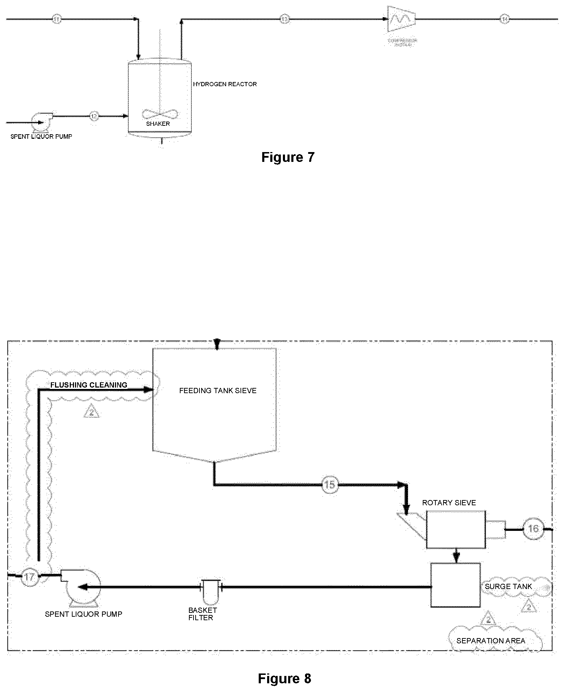

To take advantage of the sodium aluminate generated in the reactor, the solid-liquid separation step, described in Figure 8, is necessary. The liquid is used in the Bayer process and the solid goes on to the cleaning stage.

**Process of cleaning the polymer after alkaline dissolution**

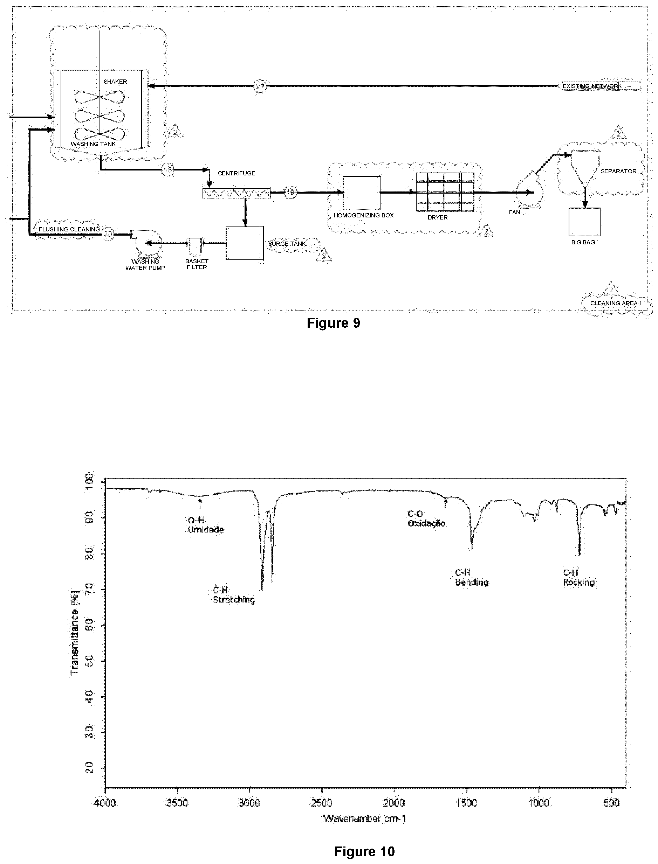

The polymer after the alkaline dissolution step remains with the characteristics preserved, however, for recycling to be possible it is necessary to reduce the residual sodium aluminate content through the water cleaning step, as shown in Figure 9.

**STEP 4 - Polymer recycling**

The solid has its moisture reduced in the drying step and is stored in big-bags for later densification and use, as in extrusions, for example. The polymer generated has properties close to the original material and can be used to produce different materials.

**Materials, methods and results**

Based on studies carried out for the production of sodium and hydrogen aluminate from the materials mentioned above and knowledge of the refinery process, laboratory tests were carried out to confirm the generation of these products.

**Characterization of Bayer liquor**

Analyses were performed by titulometry, using as reference the NBR 15944 standard of 05/2011, to determine the caustic concentration of the solution, being the sum of the sodium hydroxide and aluminate components (NaOH e $Na_2AlO_2$),expressed as TC (Total Caustic), the concentration of alumina, expressed in the form of aluminum oxide ($Al_2O_3$), and the concentration of sodium carbonate, expressed as $Na_2CO_3$. All of these terminologies are typical of the Bayer process and facilitate the assessment of the impacts of this process.

An ion chromatography analysis was also carried out to determine the concentration of sodium chlorides, fluorides, sulfates and oxalates. The analyzes are available in table 1. This result shows the composition of Bayer liquor to confirm the increase in dissolved alumina content.

Table 1: Composition of Bayer liquor

| Total (g/L) | Caustic$Al_2O_3$ (g/L) | $Na_2CO_3$ (g/L) | $NaC_2O_4$ (g/L) | NaCl (g/L) | NaF (g/L) | $Na_2SO_4$ (g/L) |
|---|---|---|---|---|---|---|
| 228.3 | 100.2 | 74.6 | 4.59 | 6.56 | 0.81 | 3.98 |
| Density (g/L) | Viscosity (cP) | | | | | |
| 1.13 | 48 | | | | | |

**Characterization of PolyAlu**

Analyses of the aseptic carton packaging materials post-consumer and post-cleaning process, the post-pyrolysis PolyAlu and the post-3D printing aluminum powder to determine the percentage of aluminum were performed by a Panalytical X-Ray Fluorescence equipment, model Axios Minerals, for qualitative and quantitative assays, and the Spectra Evaluation program was used to analyze the scan.

To determine the properties of the polyethylene, a Differential Scanning Calorimetry (DSC) was performed. The analyzes were carried out in an inert atmosphere with a purge gas flow of 50 ml/min of argon and a protector of 100 ml/min of argon. Heating was carried out from 25 °C to 600 °C at a rate of 10°C/min. Empty alumina crucibles were used as a reference.

To determine the moisture content of the material, samples, already weighed, were placed in an oven at 105 °C for 1h30 min. After this step, it was placed in a desiccator to cool and not acquire moisture in water. Then they were weighed again and the moisture value was determined by the formula:

$$\%U = \frac{m_1 - m_2}{m_1} \; x \; 100$$

The results of the analyzes are available in table 2.

Table 2: Composition

| Material | Humidity % | Aluminum % | Polyethylene % | Others % |
|---|---|---|---|---|
| PolyAlu post-hydrapulper | 50 | 10 | 37 | 3 |
| PolyAlu post-pyrolysis | 2.0 | 23 | 0 | 75 |
| PolyAlu post-cleaning process | 1.3 | 20 | 74 | 4.7 |
| Aluminum powder post 3D printing | - | 93.43 | - | 6.57 |
| Flexible packaging | 0.8 | 22 | - | 77.2 |

**Characterization of PolyAlu before alkaline dissolution**

Fourier transform infrared spectroscopy (FTIR) analyzes and differential scanning calorimetry (DSC) analysis were performed to identify the type of polymer.

FTIR analysis was used to evaluate the functional groups present in the polymer. The FTIR result of PolyAlu before alkaline dissolution, figure 10, showed the characteristic bands of polyethylene, valence or *"stretching"* between 2950 and 2850 cm$^{-1}$; pendulum or *"bending"* between 1350 and 1450 cm$^{-1}$; twisting or "*rocking*" at approximately 700 cm$^{-1}$. It also presented additional bands of organic compounds. Such compounds could not be precisely defined. However, the bands can correspond to CO and CX bonds (X = F, Cl, Br, I), indicating fiber residual from the previous processing.

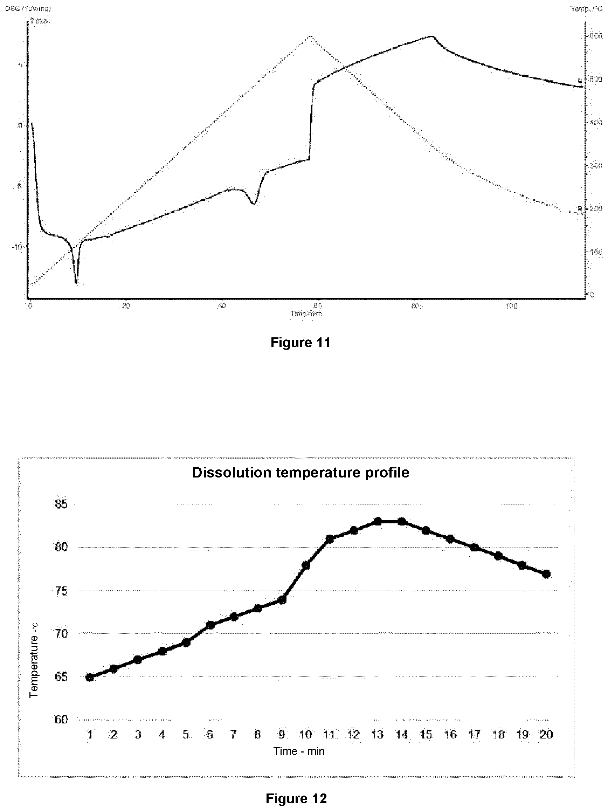

As for the DSC analysis, performed in an inert atmosphere with a purge gas flow of 50 ml/min argon and a protective gas flow of 100 ml/min argon, with temperatures from 25 °C to 600 °C at a heating rate of 10 C/min of a 2.79 mg sample of the polymer after the cleaning process, figure 11. Empty alumina crucibles were used as a reference.

In the DSC curve, two endothermic peaks were observed (the first around 115°C and the second around 485°C). Such peaks corroborate the FTIR-ATR analysis with the thermal properties of polyethylene, in which the first peak represents the melting temperature and the second the polymer degradation. In this case, the sample shows thermal behavior of low density polyethylene, which is commonly applied in the manufacture of films and packaging.

**Solubilization of aluminum**

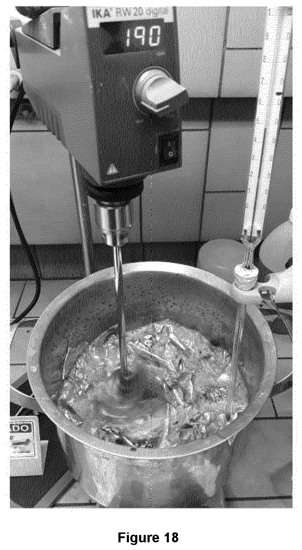

150 g of raw materials were weighed and transferred to a reactor containing 1 liter of Bayer liquor solution under a temperature of 65°C, with constant agitation, as shown in figure 18. The temperature was measured using a glass thermometer and the reaction time was measured. After the reaction was finished, filtration was performed with a 150 μm screen and the filtrate was collected for chemical composition analysis. The polyethylene retained on the filtration screen was washed with 500 mL of water, and then the material was taken to dry in an oven at 85°C for 6 h. Finally the mass of polyethylene was weighed.

The results of the experiments are shown below:

**1. PolyAlu post-cleaning process**

The result of the aluminum dissolution temperature profile, shown in figure 12, was important to ensure temperature control and prevent loss of polymer properties.

Results of the analysis of Bayer liquor before and after the aluminum dissolution process contained in the PolyAlu sample after the cleaning process are shown in table 3.

Table 3: Analysis results of Bayer liquor before and after the process

| Condition | Total Caustic (g/L) | Al$_2$O$_3$ (g/L) | Na$_2$CO$_3$ (g/L) | NaC$_2$O$_4$ (g/L) | NaCl (g/L) | NaF (g/L) | Na$_2$SO$_4$ (g/L) |
|---|---|---|---|---|---|---|---|
| Before | 228.3 | 100.2 | 74.6 | 4.59 | 6.56 | 0.81 | 3.98 |
| After | 226.2 | 151.2 | 73.6 | 4.52 | 6.24 | 0.90 | 3.87 |

**2. Aluminum powder after 3D printing**

Results of the analysis of Bayer liquor before and after the aluminum dissolution process contained in the aluminum powder sample are shown in table 4.

Table 4: Analysis results of Bayer liquor before and after the process

| Condition | Total Caustic (g/L) | $Al_2O_3$ (g/L) | $Na_2CO_3$ (g/L) | $NaC_2O_4$ (g/L) | NaCl (g/L) | NaF (g/L) | $Na_2SO_4$ (g/L) |
|---|---|---|---|---|---|---|---|
| Before | 223.3 | 87.4 | 58.65 | 5.03 | 6.15 | 1.38 | 2.93 |
| After | 227.7 | 108.3 | 62.85 | 5.35 | 6.49 | 1.34 | 3.23 |

**3. Flexible packaging**

Results of the analyses of the Bayer liqueur before and after the dissolution process of the aluminum contained in the sample of coffee packaging and juice packaging are shown in tables 5 and 6.

Table 5: Analysis results of Bayer liquor before and after the coffee packaging process

| Condition | Total (g/L) | Caustic$Al_2O_3$ (g/L) | $Na_2CO_3$ (g/L) |
|---|---|---|---|
| Before | 214.6 | 99.7 | 66.8 |
| After | 217.5 | 114.6 | 67.3 |

Table 6: Analysis results of Bayer liquor before and after the juice packaging process

| Condition | Total (g/L) | Caustic$Al_2O_3$ (g/L) | $Na_2CO_3$ (g/L) |
|---|---|---|---|
| Before | 214.6 | 99.7 | 66.8 |
| After | 216.4 | 134.2 | 67.8 |

**4. Post-pyrolysis**

Results of the analysis of Bayer liquor before and after the process of dissolving the aluminum contained in the pyrolysis sample are shown in table 7.

Table 7: Analysis results of Bayer liquor before and after the process

| Condition | Total (g/L) | Caustic$Al_2O_3$ (g/L) | $Na_2CO_3$ (g/L) |
|---|---|---|---|
| Before | 214.6 | 99.7 | 66.8 |
| After | 218.7 | 187.4 | 70.5 |

**Calculation to determine the solubilization efficiency**

The efficiency of the solubilization process is achieved through the mass balance of the aluminum solubilized in the solution.
By the mass balance we have:
Aluminum mass in the sample:

$$Aluminum\ Mass\ (g) = \ Wet\ mass\ (g) \times \left[1 - \left(\frac{\%\ Moisture}{100}\right)\right] \times \left(\frac{\%\ Aluminum}{100}\right)$$

$$Aluminum\ Mass\ (g) = 150{,}0 \times \left(\frac{20}{100}\right) \times \left[1 - \left(\frac{1{,}3}{100}\right)\right] = 29{,}61\ g$$

$Al_2O_3$ equivalent in the Bayer solution:

$$Al203\ Mass\ (g) = \ Aluminum\ Mass\ \ (g) \times \frac{MM\ Al203}{MM\ Al\ x\ 2}$$

$$Al203\ Mass\ (g) = 29{,}61\ (g) \times \frac{102\frac{g}{Mol}}{27\frac{g}{mol}\ x\ 2} = 55{,}93\ g$$

Maximum $Al_2O_3$ concentration in the Bayer solution after the dissolution process:

$$[Al203]\ Bayer\ liquor\ after\ dissolution = \ Al203\ Mass\ \ (g) + [\ Al203\ Sol\ Bayer]$$

$$[Al203]\ Bayer\ liquor\ after\ dissolution = \ 55{,}93\ (g) + 100{,}2\ g/L\ = \ 156{,}13\ g/L$$

Calculating the Efficiency of the aluminum dissolution reaction gives:

$$Efficiency\ (\%) = \frac{[Al203]\ post\ dissol\ -\ [Al203]initial}{[Al203]\ max\ -\ [Al203]initial} \times 100$$

$$Efficiency\ (\%) = \frac{151{,}2\ g/L -\ 100{,}2\ g/L}{156{,}13\ g/L\ -\ 100{,}2\ g/L} \times 100 = \textbf{91,2\%}$$

The results of the analysis of Bayer liquor before and after the aluminum dissolution process for all raw materials used show a significant increase in the concentration of alumina ($Al_2O_3$) in the solution, indicating that the aluminum dissolution was effective. Table 8 shows the data with the reaction efficiency calculation.

Table 8 - Calculation of the reaction efficiency

| Material | Efficiency (%) |
| --- | --- |
| PolyAlu post-cleaning process | 91.2 |
| 3D printing post aluminum powder | 75.3 |
| Flexible packaging - coffee powder | 35.3 |
| Flexible packaging - juice packaging | 63.9 |
| Post-pyrolysis | 64.9 |

The efficiencies of the aluminum dissolution process can vary according to the reaction time, the concentration of raw material in the solution, the intensity of agitation, the particle size or even making new batches of dissolution with a new liquor.

**PolyAlu filtration and washing process after alkaline dissolution**

The material went through a washing process to remove the liquor and return to neutral pH. After washing, the material was dried in an oven at 85°C for 6 hours.

**Characterization of PolyAlu after alkaline dissolution**

To prove the recycling potential of the Polymer separated and washed after the dissolution of the aluminum a series of analyzes were carried out are presented in the sequence.

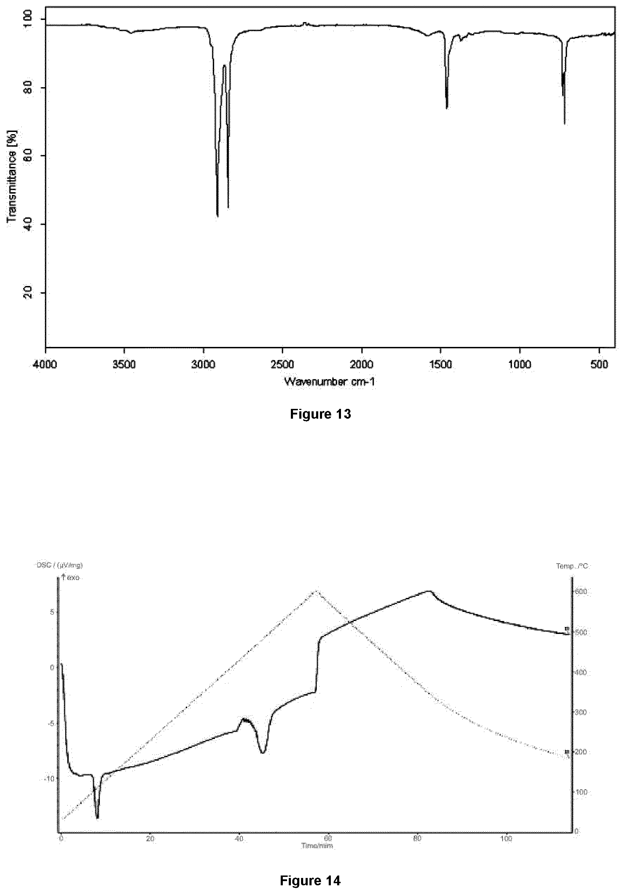

An analysis was performed on the polyethylene after drying, infrared spectroscopy with Fourier transform (FTIR). The results are shown in figure 13. The referring spectrum kept the characteristic bands of polyethylene, valence or *"stretching"* between 2950 and $2850cm^{-1}$; pendulum or *"bending"* between 1350 and $1450\ cm^{-1}$; twisting or *rocking* at approximately $700cm^{-1}$ and the residual bands of additional organic compounds were removed.

A DSC analysis was also carried out. The analysis was carried out in an inert atmosphere with a purge gas flow of 50 ml/min of argon and a protector of 100 ml/min of argon. Heating from 25 °C to 600 ° C at a rate of 10 °C/min of a sample of 3.24 mg of the polymer sample in an alumina crucible. Empty alumina crucibles were used as a reference.

In the curve, figure 14, two endothermic peaks were observed (the first around 110 °C and the second around 480 °C). With the second showing a possible initial exothermic decomposition. Such peaks resemble the PolyAlu sample before alkaline dissolution, with the exception of this initially exothermic decomposition.

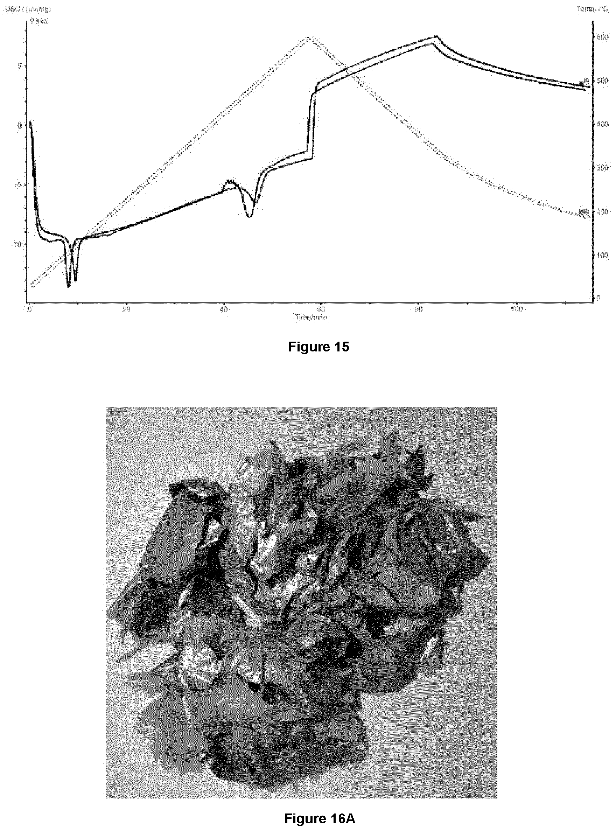

Superimposing the graphs, we have figure 15. It is observed that this possible initial exothermic decomposition is not significant when compared to the DSC curve of the initial sample. Which indicates that the material did not undergo chemical attacks with the dissolution.

Polymer tensile test after alkaline dissolution process and fluidity index

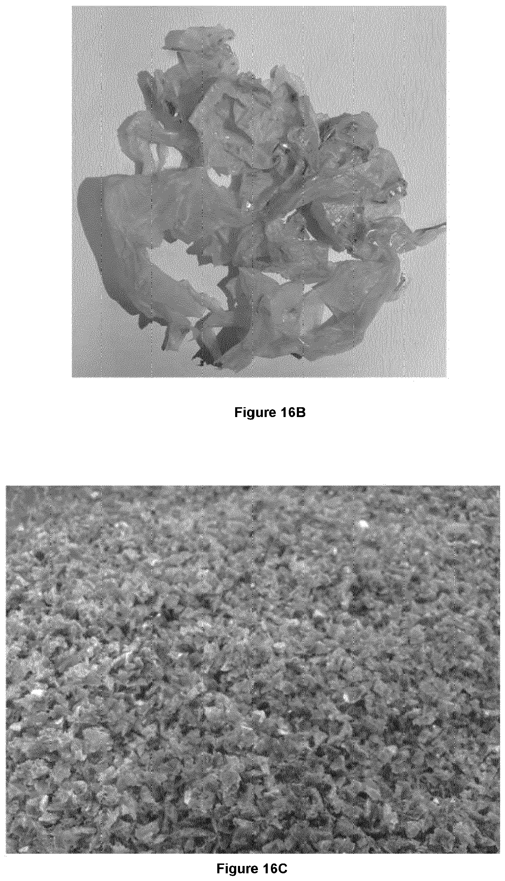

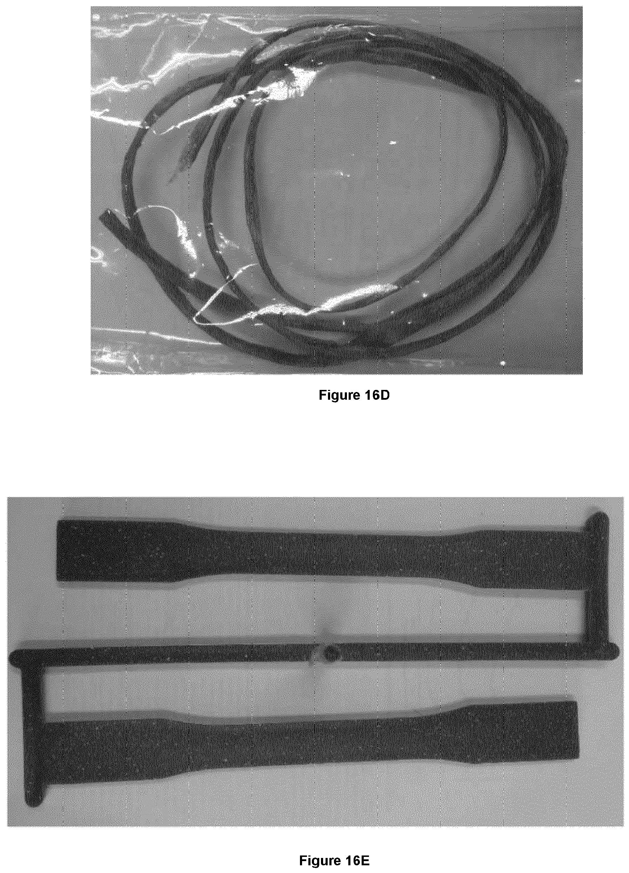

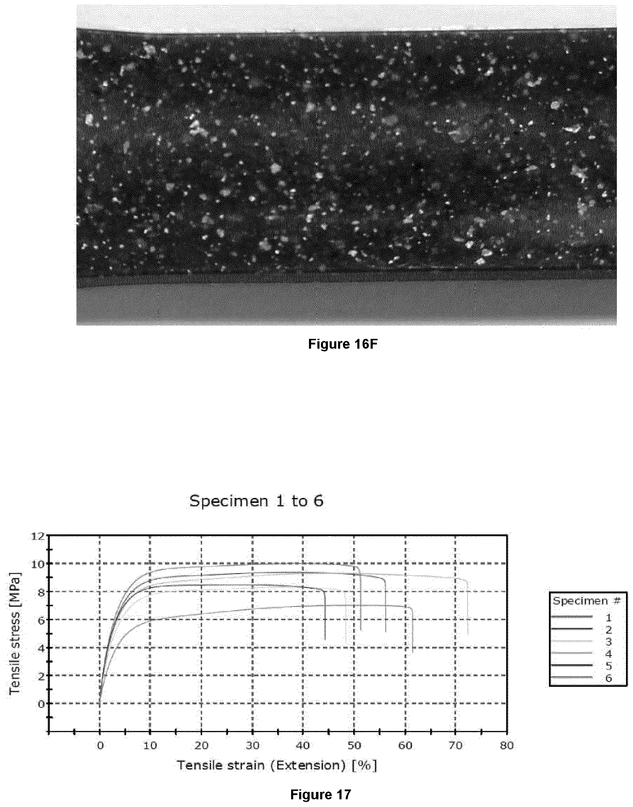

figures 16A and 16B visually demonstrate the removal of aluminum after dissolution. To show the effectiveness of the dissolution recycling process, after this process the polymer that remained after the alkaline aluminum dissolution process was processed using pressing, melting and grinding techniques, as shown in figure 16C, and then extruded, figure 16D, and cut to form the pellets. To perform the tensile test, the pellets were inserted into an injection molding machine with a traction specimen mold, figure 16E, following the ASTM D638 standard specification. The tensile test was performed in a room with controlled humidity at 50%, temperature at 22.5 °C and stretching speed of 50 mm/min. In figure 16F it is possible to observe that there is still a small percentage of aluminum.

The graph in figure 17 shows the tests performed in the laboratory. Table 9 shows the results of the tensile tests.

Table 9: Comparison of tensile results of the post-dissolving polymer with the pure PE.

| | Breaking St ress (MPa) | | Deformatio n at break (%) | | Elastic Mo dulus (MPa) | |
|---|---|---|---|---|---|---|
| | Average | Standard deviation | Average | Standard deviation | Average | Standard deviation |
| Pure PE | 11.36 | 0.31 | 116.70 | 4.09 | 95.37 | 5.13 |
| PolyAlu | 10.97 | 0.12 | 38.86 | 3.51 | 177.60 | 2.23 |
| Post-dissolution polymer | 8.90 | 1.05 | 53.19 | 10.67 | 343.05 | 30.92 |

The tensile strength has been reduced slightly when compared to pure PE and PolyAlu. When the deformation of the Polymer post-dissolution is compared with the deformation of pure PE, a reduction of this property is perceived, however it presents a greater value when compared to the deformation with that of PolyAlu. The increase in the elastic modulus is related to aluminum and the removal of residual fibers during the processes of this work.

The fluidity index (MFI) test was carried out with a load of 2.16 kg and a temperature of 190° C. The material was tested after injection. The result obtained was 6.672 g/10min.

The flow rate of virgin polyethylene is 6.0 to 8.0 g/10min. Which indicates that the material maintained this property.

**Reaction of polyethylene with Bayer liquor**

Polyethylene (PE) is stable in alkaline solutions. However, at high temperatures the PE structure becomes porous, making washing and separation difficult. Therefore, it is necessary to control the reaction temperature so that it does not reach temperatures above the PE degradation temperature. A maximum temperature of 85°°C was thus determined.

It is important to remember that the temperature control was made below 100 °C so that the polyethylene does not melt, since the melting temperature is in the region of 110° to 130 °C, depending on the type of polyethylene.

**Mixture of hydrogen**

The blending of hydrogen with natural gas has already been studied by companies in Europe. For example, in England a consortium of companies, Cadent Gas and Northern Gaz Networks, with Keele University, are studying the possibility of blending hydrogen with the natural gas network to reduce the production of carbon produced.

The NREL laboratory, in the United States, also carried out a study of blending with natural gas, in small concentrations, of 5% -15%. For this, it is necessary to evaluate the costs, impacts and reductions. The Gastec group also conducted studies for companies in the Netherlands, Germany, Italy, England and the United States.

**Claims**

1. Aluminum recovery process, from a recycled material containing aluminum, which: aseptic carton packs (1), flexible packs (2), aluminum powders (3), or similar, **characterized by** understanding the steps of:

   dissolve, via alkaline dissolution, the raw material (1a, 1b, 1c, 2a, 2b, 3) containing aluminum (Reaction 1) in Bayer liquor and/or in NaOH, generating sodium aluminate and gaseous hydrogen; and
   submit the sodium aluminate to the Bayer process for the production of alumina and later aluminum.

2. Process according to claim 1, **characterized by** comprising the additional step of using the gaseous hydrogen produced, in the alkaline dissolution step, as a fuel (Reaction 2) in combustion units of the alumina refinery.

3. Process, according to claim 1, **characterized in that** said alkaline dissolution comprises the reaction, in a reactor, of the post-treated raw material (Step 1) with caustic soda (NaOH), said caustic soda being added in an amount of up to 50% by weight.

4. Process, according to claim 1, **characterized in that** said alkaline dissolution comprises the reaction, in a reactor, of the post treated feedstock (Step 1) with Bayer liquor, said Bayer liquor being added in concentrations from 100 g/l to 1,000 g/l, on a $Na_2CO_3$ basis.

5. Process according to claim 3 or 4, **characterized in that** said alkaline dissolution comprises the reaction, in a reactor, of the post-treated raw material (Step 1) with a mixture comprising caustic soda and Bayer liquor.

6. Process, according to claim 1, **characterized in that** it comprises, after the alkaline dissolution step, the further step of performing a liquid/solid separation in order to separate the sodium aluminate (liquid) from the polymeric residue (solid).

7. Process according to claim 6, **characterized in that** the solid polymeric residues are subjected to a cleaning and subsequent recycling process (Step 4).

8. Process according to claim 7, **characterized in that** the process for cleaning solid waste comprises washing the solid waste with water to eliminate residual sodium aluminate.

9. Process, according to claim 7, **characterized in that** the recycling process (Step 4) comprises the drying of solid waste and subsequent processing of the polymer, such as extrusion, pressing, injection, among others.

10. Process according to claim 1, **characterized in that** it also comprises a preparation step (Step 1) of the raw material (1a, 1b, 1c, 2a, 2b), preceding the alkaline dissolution step (Reaction 1).

11. Process according to claim 10, **characterized in that**, when the recycled material containing aluminum is obtained from aseptic carton packs (1), it comprises the steps of:

    remove the paper, preferably via a hydrapulper, generating a laminated aluminum and polymer by-product (PolyAlu); and
    process the by-product (PolyAlu), from:

       a cleaning procedure, to generate a raw material (1a) suitable for the alkaline dissolution step; or
       a pyrolysis process followed by a coal removal process, to generate a raw material (1b) suitable for the alkaline dissolution step; or
       a chemical separation process, to generate a raw material (1c) suitable for the alkaline dissolution step.

12. Process according to claim 10, **characterized in that**, when the recycled material containing aluminum is obtained from aseptic carton packs (2), it comprises the steps of:

    subjecting flexible packaging (2) to a pyrolysis process followed by a process of removing coal, to generate a raw material (2a) suitable for the alkaline dissolution step; or
    grind the flexible packaging (2), or the flexible packaging shavings (2), to generate a raw material (2b) suitable for the alkaline dissolution step.

13. Process, according to claim 10, **characterized in that**, when the recycled aluminum-containing material is aluminum powder from 3D printers, it directly proceeds to alkaline dissolution.

14. Process according to any one of claims 10 to 13, **characterized in that** the alkaline dissolution employs one, or a combination of the raw materials (1a, 1b, 1c, 2a, 2b, 3).

POLYETHYLENE
Product protection
POLYETHYLENE

Adherence Layer
ALUMINUM
Oxygen, aroma and light barrier — 5%

POLYETHYLENE
Adherence Layer — 20%

PAPER
Stability and strength of the packaging — 75%

POLYETHYLENE
Protection against external humidity

**Figure 1A**

**Figure 1B**

**Figure 2A**

**Figure 2B**

Figure 3

Figure 4

Step 1 - preparation of the raw material;

(2) Flexible packaging
(2.b) Crushed flexible packaging

Pyrolysis

(1) PolyAlu after bidrapulper

PolyAlu cleaning process

(1.a)

Process of cleaning flexible packaging

Step 4

Polymer recycling

(1.b)
(2.a)

Chemical separation

(1.c)

Step 2 - Alkaline dissolution of aluminum

Hydrogen gas (H₂)

Reaction2 alumina refinery (Calciners, Boilers)

Polimero

Alkaline dissolution process (Reaction 1)

(3) Aluminum powder post 3D

Process of cleaning the polymer after alkaline dissolution

Polymer

Caustic soda and/or Bayer liquor

Separation Process

To sodium uminate

Step 3 - Polymer cleaning process after alkaline dissolution

Alumina Refinery (Bayer process)

**Figure 5**

**Figure 6**

HYDROGEN REACTOR

SHAKER

SPENT LIQUOR PUMP

**Figure 7**

FLUSHING CLEANING

FEEDING TANK SIEVE

ROTARY SIEVE

SURGE TANK

SPENT LIQUOR PUMP

BASKET
FILTER

SEPARATION AREA

**Figure 8**

**Figure 9**

**Figure 10**

Figure 11

Figure 12

**Figure 13**

**Figure 14**

Figure 15

Figure 16A

Figure 16B

Figure 16C

Figure 16D

Figure 16E

Figure 16F

Figure 17

**Figure 18**

## INTERNATIONAL SEARCH REPORT

| | International application No. |
|---|---|
| | **PCT/BR2019/050563** |

### A. CLASSIFICATION OF SUBJECT MATTER

**B09B3/00 (2006.01), B29B17/02 (2006.01), B03B9/00 (2006.01), C22B7/00 (2006.01), C22B21/00 (2006.01)**

According to International Patent Classification (IPC) or to both national classification and IPC

### B. FIELDS SEARCHED

Minimum documentation searched (classification system followed by classification symbols)

**B09B3, B29B17,B03B9,C22B7,C22B21**

Documentation searched other than minimum documentation to the extent that such documents are included in the fields searched

**Banco de Patentes do INPI-BR, Science Direct**

Electronic data base consulted during the international search (name of data base and, where practicable, search terms used)

**Derwent Innovations Index, Espacenet, Google Patents**

### C. DOCUMENTS CONSIDERED TO BE RELEVANT

| Category* | Citation of document, with indication, where appropriate, of the relevant passages | Relevant to claim No. |
|---|---|---|
| X<br>Y | KAISER, K., et al.,"Recycling of polymer-based multilayer packaging: a review" ;Recycling, 22 December 2017,12,3,1; doi:10.3390/recycling3010001, Disponível em https://www.mdpi.com/2313-4321/3/1/1, Accessed in 25/02/2020 ( page 5, item 2.1.3; page 12, paragraph 8 and9; page 13, paragraph 1, page 19, paragraph 6) | 1,10<br>2-9,11-14 |
| Y | PI0706115-3 B1 (KISNER ALEXANDRE; RAU MARTINHO; NICOLETI CELSO RODRIGO; KUBOTA LAURO TATSUO [BR]) 04 December 2018 (2018-12-04) (page 2, lines 6-8; page 3, lines 13-16; page 4, lines 6-8; page 5, lines 13-16; page 10, lines 16-20; page 14, lines 15-19) | 2-9,11-14 |
| A | WO2010054449 A1 (SANERIP WAGNER JANSISKI [BR]) 20 May 2010 (2010-05-20) The whole document | 1-14 |

| ☒ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2020 (20.02.2020)** | **07 March 2020 (07.03.2020)** |

| Name and mailing address of the ISA/**BR** | Authorized officer |
|---|---|
| **INPI** INSTITUTO NACIONAL DA PROPRIEDADE INDUSTRIAL Rua Mayrink Veiga n° 9, 6° andar cep: 20090-910, Centro - Rio de Janeiro/RJ<br>Facsimile No.   +55 21 3037-3663 | **Mariana Coutinho Brum**<br>Telephone No.    +55 21 3037-3493/3742 |

Form PCT/ISA/210 (second sheet) (January 2015)

**INTERNATIONAL SEARCH REPORT**

| International application No. |
|---|
| **PCT/BR2019/050563** |

C (Continuation). DOCUMENTS CONSIDERED TO BE RELEVANT

| Category* | Citation of document, with indication, where appropriate, of the relevant passages | Relevant to claim No. |
|---|---|---|
| A | CN102166579B (LIN XIAOLEI; MEI XINGXIAN; WANG JUANJUAN; YANG HENG; ZHANG LULU; ZHANG SUFENG ) 13 February 2013 (2013-02-13) The whole document | 1-14 |
| A | WO2004031274 A1 (MUKHOPADHYAY ASHUTOSH [IN]) 15 April 2004 (2004-04-15) The whole document | 1-14 |

Form PCT/ISA/210 (continuation of second sheet) (January 2015)

**INTERNATIONAL SEARCH REPORT**

Information on patent family members

| International application No. |
| --- |
| **PCT/BR2019/050563** |

| | | | |
| --- | --- | --- | --- |
| PI0706115-3 B1 | 2018-12-04 | None | |
| WO 2010054449 A1 | 2010-05-20 | None | |
| CN102166579B | 2013-02-13 | None | |
| WO 2004031274 A1 | 2004-04-15 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BR 1020170043487

- US 20170080603 A1

**Non-patent literature cited in the description**

- Hydrometallurgy - International Journal. Elsevier